(19) Europäisches Patentamt / European Patent Office / Office européen des brevets

(11) **EP 4 008 187 A1**

(12) **DEMANDE DE BREVET EUROPEEN**

(43) Date de publication:
**08.06.2022 Bulletin 2022/23**

(21) Numéro de dépôt: **21210645.4**

(22) Date de dépôt: **26.11.2021**

(51) Classification Internationale des Brevets (IPC):
**A01N 59/20** (2006.01)   **B29C 64/118** (2017.01)
**B33Y 10/00** (2015.01)   **B33Y 70/10** (2020.01)
**C08K 3/34** (2006.01)   **D01F 1/10** (2006.01)
**C08L 67/04** (2006.01)   **A01N 25/10** (2006.01)
**A01N 59/16** (2006.01)   **B33Y 70/00** (2020.01)
**B33Y 80/00** (2015.01)   **D01D 5/08** (2006.01)

(52) Classification Coopérative des Brevets (CPC):
(C-Sets disponibles)
**D01D 5/08; A01N 59/16; A01N 59/20;
B29C 64/118; B33Y 70/00; B33Y 80/00;
C08K 3/34; C08L 67/04; D01F 1/103;** C08K 3/015;
C08K 2201/005; C08K 2201/014      (Cont.)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **01.12.2020 FR 2012457**

(71) Demandeur: **Capnovia**
**22540 Louargat (FR)**

(72) Inventeurs:
• **PELLETER, Jacques**
**29600 MORLAIX (FR)**
• **LENEVEU, Erwan**
**69007 LYON (FR)**
• **LECOQ, Jonathan**
**69007 LYON (FR)**

(74) Mandataire: **Opilex**
**32, rue Victor Lagrange**
**69007 Lyon (FR)**

(54) **UTILISATION D'UNE COMPOSITION COMPRENANT UNE ZÉOLITHE AU CUIVRE PARTICULIÈRE EN FABRICATION ADDITIVE PAR DÉPÔT DE MATIÈRE FONDUE**

(57) Utilisation d'une composition comprenant au moins un polymère thermoplastique et une zéolithe dans un procédé de fabrication additive par dépôt de matière fondue, la composition comprenant :
de 92 à 98% en poids d'au moins un polymère thermoplastique par rapport au poids total de la composition et de 2 à 8 % en poids de zéolithe contenant du cuivre par rapport au poids total de la composition, ladite zéolithe présentant une granulométrie allant de 1 à 5µM, contenant de 20 à 25% en poids d'eau par rapport au poids total de la zéolithe et du cuivre en une quantité allant de 2 à 6% en poids par rapport au poids total de la zéolithe sous forme sèche et utilisation de la composition pour la préparation d'un article biocide en particulier pour inactiver les virus notamment les virus influenza A et les coronavirus.

[Fig.1]

**(Cont. page suivante)**

(52) Classification Coopérative des Brevets (CPC):
(Cont.)

C-Sets
**A01N 59/16;
A01N 59/20;
C08K 3/34;
C08L 67/04**

## Description

L'invention concerne le domaine des compositions antimicrobiennes, en particulier antivirales, utilisables dans un procédé de fabrication additive par dépôt de matière fondue (FDM) ainsi que les articles antimicrobiens, en particulier antiviraux, ainsi obtenus.

Les compositions antimicrobiennes utilisables pour fabriquer des articles, en particulier des articles de grande consommation sont de plus en plus recherchées et leur demande s'est accrue avec l'apparition des récentes crises sanitaires.

En effet, les industriels qui produisent des articles en matières plastiques, en particulier des articles de la vie courante, manifestent de façon accrue une volonté de proposer des gammes de produits présentant des propriétés antimicrobiennes. Cette volonté s'est renforcée avec l'apparition de l'épidémie de COVID-19 générée par un virus contagieux. Sur la base du constat que le virus pouvait survivre quelques temps sur certaines matières et être transmis par contact avec ces matières, les industriels ont cherché à réduire ce risque.

Face à ce problème, les inventeurs de la présente invention ont cherché à proposer des compositions antimicrobiennes stables, faciles à mettre en œuvre, en particulier qui puissent être utilisées dans des procédés de fabrication additive afin d'être accessibles au plus grand nombre, et dans lesquelles l'agent antimicrobien est efficace de manière durable avantageusement pendant 5 ans et plus particulièrement pendant 2 ans.

## Art antérieur

Des compositions antimicrobiennes sont déjà connues. En particulier le brevet US 9523160 B2 divulgue une composition antimicrobienne sous forme de filament pour l'impression 3D comprenant une résine thermoplastique et un agent antimicrobien inorganique, organique ou naturel. A titre d'exemple est présentée une composition à base d'acide polylactique (PLA) et d'une zéolithe substituée avec des ions argent. Cette composition est préparée par un procédé en deux étapes : une première étape lors de laquelle un lot principal, « master batch » en langue anglaise, est préparé par extrusion d'un premier mélange comprenant une résine thermoplastique et un agent antimicrobien puis une deuxième étape lors de laquelle un filament antimicrobien est préparé par extrusion d'un deuxième mélange comprenant ledit lot principal et une résine thermoplastique. Les filaments obtenus contiennent un taux de zéolithe peu élevé. L'activité microbienne décrite semble également modérée.

En conséquence, il demeure toujours en besoin de disposer de compositions pour fabriquer des articles à base de polymères présentant un taux élevé en agent antimicrobien et qui puissent être préparées aisément, à moindre coût avantageusement en une seule étape.

L'invention vise à résoudre un ou plusieurs inconvénients de l'art antérieur.

L'invention porte ainsi sur l'utilisation d'une composition comprenant au moins un polymère thermoplastique et une zéolithe, dans un procédé de fabrication additive par dépôt de matière fondue, ladite composition comprenant :

de 92 à 98% en poids d'au moins un polymère thermoplastique par rapport au poids total de la composition et de 2 à 8 % en poids de zéolithe contenant du cuivre par rapport au poids total de la composition, ladite zéolithe présentant une granulométrie allant de 1 à 5 $\mu$M, contenant de 20 à 25% en poids d'eau par rapport au poids total de la zéolithe et du cuivre en une quantité allant de 2 à 6% en poids par rapport au poids total de la zéolithe sous forme sèche.

En particulier le procédé de fabrication additive par dépôt de matière fondue est un procédé de fabrication additive par dépôt de fil fondu.

L'invention vise aussi l'utilisation de la composition selon l'invention pour la préparation d'un article biocide en particulier pour inactiver les virus notamment les virus influenza A et les coronavirus.

L'invention vise encore un procédé de préparation de la composition utilisée selon l'invention, ledit procédé comprenant au moins une étape, de préférence une seule étape, de mélange du polymère thermoplastique et de la zéolithe contenant du cuivre, de préférence par extrusion et de manière préférée eu moyen d'une extrudeuse bi-vis co-rotative.

La zéolithe utilisée selon l'invention présentant des caractéristiques particulières en termes de taux de cuivre, de granulométrie et de teneur en eau peut être facilement mélangée avec des polymères thermoplastiques notamment en une seule étape d'extrusion pour conduire à une composition stable et homogène. En effet il a été observé que le choix de la zéolithe permet la préparation de compositions sans production excessive de mousse, or c'est précisément la production de mousse qui conduit généralement à complexifier la mise en œuvre du procédé. Les compositions utilisées selon l'invention peuvent être mises en œuvre de manière simple en un seul mélange c'est-à-dire un seul cycle d'homogénéisation, en particulier un seul passage dans une extrudeuse bivis. La mise en œuvre du procédé en un seul passage dans l'extrudeuse présente l'avantage de conserver la stabilité des différents composants en conséquence la rhéologie de la composition est moins altérée et l'impression finale facilitée.

L'utilisation de la zéolithe particulière selon l'invention permet l'obtention d'une composition à haute teneur en agent anti-microbien. La composition utilisée selon la présente invention permet de conférer des propriétés antimicrobiennes aux articles préparés à partir de ladite composition et également de ralentir voire d'empêcher la dégradation des polymères utilisés. Les propriétés mécaniques desdits articles obtenus à partir des compositions selon l'invention sont conservées plus longtemps, lesdits articles sont moins cassants et conservent leur flexibilité sur une période plus longue.

En outre les ions cuivre sont, avantageusement, de très petite taille correspondant à échelle moléculaire, cependant leur utilisation au sein d'une zéolithe dont la taille est de l'ordre du micron permet d'éviter les risques liés à la manipulation des très petites particules.

L'invention porte également sur les variantes suivantes. L'homme du métier comprendra que chacune des caractéristiques des variantes suivantes peut être combinée indépendamment aux caractéristiques ci-dessus, sans pour autant constituer une généralisation intermédiaire.

Selon une première variante, la composition utilisée selon l'invention comprend de 4 à 6 % en poids de zéolithe contenant du cuivre par rapport au poids total de la composition.

Selon une deuxième variante, la composition utilisée est telle que la zéolithe contient de 3 à 4% en poids de cuivre par rapport au poids total de la zéolithe sous forme sèche.

Selon une troisième variante, la composition utilisée est telle que la zéolithe est une zéolithe synthétique choisie parmi les zéolithes de forme A, X et Y et de manière préférée de forme Y, avantageusement la zéolithe est une zéolithe NaY.

Selon une quatrième variante, la composition utilisée comprend au moins une zéolithe supplémentaire choisie parmi les zéolithes d'argent et les zéolithes de zinc.

Selon une cinquième variante, la composition utilisée est telle que le polymère thermoplastique est choisi dans le groupe formé par le poly(acide lactique) (PLA), le polybutylene adipate terephtalate (PBAT), et le polypropylene (PP).

Selon une sixième variante, la composition est telle que le polymère thermoplastique est choisi parmi les polyétherimides (PEI).

Selon une septième variante la composition comprend la zéolithe contenant du cuivre en tant que seule zéolithe.

La présente invention recouvre plus particulièrement les objets particuliers suivants.

Selon un premier aspect, la présente invention vise l'utilisation dans un procédé de fabrication additive par dépôt de matière fondue d'une composition comprenant :

de 92 à 98% en poids de PLA par rapport au poids total de la composition et
de 2 à 8 % en poids de zéolithe contenant du cuivre par rapport au poids total de la composition, ladite zéolithe présentant une granulométrie allant de 1 à 5 µM, contenant de 20 à 25% en poids d'eau par rapport au poids total de la zéolithe et du cuivre en une quantité allant de 2 à 6% en poids par rapport au poids total de la zéolithe sous forme sèche.

Selon un deuxième aspect, la présente invention vise l'utilisation dans un procédé de fabrication additive par dépôt de matière fondue d'une composition comprenant :

de 92 à 98% en poids de PBAT par rapport au poids total de la composition et
de 2 à 8 % en poids de zéolithe contenant du cuivre par rapport au poids total de la composition, ladite zéolithe présentant une granulométrie allant de 1 à 5 µM, contenant de 20 à 25% en poids d'eau par rapport au poids total de la zéolithe et du cuivre en une quantité allant de 2 à 6% en poids par rapport au poids total de la zéolithe sous forme sèche.

Selon un troisième aspect, la présente invention vise l'utilisation dans un procédé de fabrication additive par dépôt de matière fondue d'une composition comprenant :

de 92 à 98% en poids de PP par rapport au poids total de la composition et
de 2 à 8 % en poids de zéolithe contenant du cuivre par rapport au poids total de la composition, ladite zéolithe présentant une granulométrie allant de 1 à 5 µM, contenant de 20 à 25% en poids d'eau par rapport au poids total de la zéolithe et du cuivre en une quantité allant de 2 à 6% en poids par rapport au poids total de la zéolithe sous forme sèche.

Selon un quatrième aspect, la présente invention vise l'utilisation dans un procédé de fabrication additive par dépôt de matière fondue d'une composition comprenant :

de 92 à 98% en poids de PEI par rapport au poids total de la composition et

de 2 à 8 % en poids de zéolithe contenant du cuivre par rapport au poids total de la composition, ladite zéolithe présentant une granulométrie allant de 1 à 5 $\mu$M, contenant de 20 à 25% en poids d'eau par rapport au poids total de la zéolithe et du cuivre en une quantité allant de 2 à 6% en poids par rapport au poids total de la zéolithe sous forme sèche.

D'autres caractéristiques et avantages de l'invention ressortiront clairement de la description qui en est faite ci-après, à titre indicatif et nullement limitatif, ainsi que des exemples.

**Définitions**

La zéolithe utilisée dans les compositions selon la présente invention contient des ions cuivre, $Cu^+$ et/ou $Cu^{2+}$, l'expression « zéolithe au cuivre » ou zéolithe contenant du cuivre est utilisée dans le présent texte.

Par agent « antimicrobien », ou biocide, au sens de la présente invention, on entend un agent qui tue, inactive ou ralentit la croissance des microbes. Les microbes peuvent être des bactéries, des mycètes, des virus ou des parasites, on parle alors respectivement d'agents « antibactérien », « antimycosique », « antiviral » et « antiparasitaire ».

**Zéolithe**

La composition utilisée selon la présente invention comprend de 2 à 8% en poids, de préférence de 4 à 6% en poids d'au moins une zéolithe au cuivre par rapport au poids total de la composition.

Les zéolithes sont des aluminosilicates, généralement hydratées, de structure tridimensionnelle. Les zéolithes correspondent à la formule suivante :

[Chem 1] $\qquad : XM_{2/n}O, Al_2O_3, YSiO_2 .Z(H_2O),$

dans laquelle

- $Al_2O_3.YSiO_2$ correspond au squelette, en outre une partie des Al et/ou Si peut être remplacée par un autre élément,
- M représente l'ion échangeable, il s'agit généralement d'un ion monovalent ou divalent, n représentant la valence de l'ion M, M est généralement choisi parmi des alcalins tels que $Na^+$ ou $K^+$,
  X et Y représentent respectivement les coefficients d'oxyde(s) de métaux et de silice,
- Z correspond au nombre de molécule d'$H_2O$ absorbées.

La forme sèche de la zéolithe correspond aux composants $XM_{2/n}O$, $Al_2O_3$, $YSiO_2$ de la formule 1. Ladite « forme sèche » est obtenue en soumettant la zéolithe à un traitement thermique sous air à une température allant de 200°C à 500°C, de préférence allant de 350°C à 450°C. Généralement ledit traitement thermique est effectué pendant une durée allant de 2 à 12 heures de préférence de 4 à 6 heures.

Avantageusement le ratio molaire $SiO_2/Al_2O_3$ de la zéolithe utilisée selon l'invention va de 4 à 6. Avantageusement, il est mesuré selon la norme ISO 21079-3:2008.

De préférence la zéolithe utilisée selon l'invention est une zéolithe synthétique choisie parmi les zéolithes de forme A, X ou Y et de manière préférée il s'agit d'une zéolithe de forme Y.

En outre les zéolithes peuvent classiquement comprendre des ions argent, cuivre ou zinc suite à un échange ionique avec un ou plusieurs ions M.

La zéolithe utilisée selon la présente invention est un aluminosilicate contenant des ions cuivre, $Cu^+$ et/ou $Cu^{2+}$, en une quantité allant de 2 à 6 % en poids et de préférence de 3 à 4 % en poids par rapport au poids total de la zéolithe sous forme sèche. Le taux de cuivre est avantageusement mesuré conformément à la norme ISO 19976-2: 2019.

De préférence la zéolithe utilisée est une zéolithe au cuivre de type NaY.

Avantageusement, la granulométrie de la zéolithe va de 1 à 5$\mu$m, et de préférence elle est de 4 $\mu$M. La granulométrie est avantageusement mesurée par diffraction laser conformément à la norme ISO 13320 :2020.

En outre la zéolithe selon la présente invention comprend une quantité d'$H_2O$ allant de 20 à 25% en poids par rapport au poids total de la zéolithe. La quantité d'eau, ou quantité d'humidité, est avantageusement mesurée conformément à la norme ISO 589 : 2008.

**Polymère thermoplastique**

La composition utilisée selon la présente invention comprend de 92 à 98% en poids, de préférence de 93 à 97% en poids d'au moins un polymère thermoplastique par rapport au poids total de la composition.

La composition utilisée selon la présente invention est préparée en mélangeant le polymère thermoplastique avec la zéolithe. Or la mise en œuvre de cette étape peut être difficile car le mélange de ces deux composants conduit généralement à la formation de mousse.

Sans vouloir être lié à une quelconque théorie, il a été montré que la zéolithe particulière utilisée dans les teneurs particulières conformément à la présente invention permet de minimiser la formation de mousse et ainsi de pouvoir réaliser la composition facilement en une seule étape avec tous types de polymères thermoplastiques.

Selon une première variante préférée, le polymère thermoplastique est un polyester. De manière préférée, le polyester est choisi dans le groupe formé par le poly(acide lactique) nommé PLA, le polybutylene adipate téréphtalate encore appelé polybutyrate nommé PBAT et le polypropylène nommé PP.

Le PLA est un polymère thermoplastique à caractère rigide. Il présente l'avantage de pouvoir être obtenu à partir de monomères biosourcés ce qui permet une utilisation pour fabriquer des articles présentant un faible impact sur l'environnement. Sa température de fusion est située dans la gamme 165-180°C. A titre d'exemple le PLA utilisé est le PLA vendu sous la dénomination commerciale Ingeo Biopolymer 3D850 par la Société NatureWorks ®.

Les compositions selon l'invention comprenant du PLA et une zéolithe au cuivre particulière permettent la réalisation d'articles d'usage du quotidien telles que des poignées de porte, des protections de barre de transport en commun, des visières anti-projections, des clips de fixation de masque filtrant.

Le PBAT est un polymère thermoplastique à caractère souple. Il présente également l'avantage d'être biodégradable ce qui permet une utilisation pour fabriquer des articles présentant un faible impact sur l'environnement. Sa température de fusion est située dans la gamme 110-120°C.

Les compositions selon l'invention comprenant du PBAT et une zéolithe au cuivre particulière permettent la réalisation d'articles d'usage du quotidien telles que des poignées de chariots en particulier de chariots de supermarché, des coques de téléphone, des semelles.

Selon une deuxième variante préférée, le polymère thermoplastique est un polyéther. De manière préférée, le polyéther est choisi parmi les polyétherimides.

Le PEI est le polymère utilisable en impression 3D FDM présentant la meilleure résistance thermique (Tg =200°C). Il est aussi résistant aux produits chimiques.

Les compositions selon l'invention comprenant du PEI et une zéolithe au cuivre particulière permettent la réalisation d'article de type matériel médical résistant aux cycles de stérilisations utilisés dans les hôpitaux.

La composition utilisée selon la présente invention comprend un ou plusieurs c'est-à-dire 2, 3 ou 4 polymères, notamment des mélanges de PLA et de PBAT. Selon une autre alternative préférée, la composition utilisée selon l'invention comprend un seul polymère, cette variante de la composition permet de faciliter encore la mise en oeuvre de la préparation de la composition.

**Additifs**

La composition utilisée selon l'invention peut également comprendre au moins une autre zéolithe choisie parmi les zéolithes comprenant de l'argent et/ou du zinc.

A titre de zéolithe comprenant de l'argent, on peut citer la zéolithe Zeo-Ag_01 commercialisée par la société Enercat.

La composition selon la présente invention peut également comprendre au moins un additif choisi dans le groupe formé par les agents plastifiants, les agents antioxydants, les lubrifiants, les colorants, les agents anti-buée, les agents anti-moussants, les charges, les extraits de plantes.

A titre d'extraits de plantes, on peut citer les extraits de pépins de pamplemousse, d'arbre à thé, aloé, les huiles essentielles.

Ces additifs sont utilisés en une teneur allant de 0 à 20% en poids par rapport au poids total de la composition. Bien entendu l'homme du métier veillera à choisir les additifs et leurs quantités en fonction des contraintes liées aux procédés de préparation et de manière à ne pas modifier les propriétés de la composition de l'invention.

Avantageusement la rhéologie de la composition doit permettre un écoulement régulier lors de la mise en œuvre du procédé de fabrication additive par dépôt de matière fondue. Il relève des compétences de l'homme du métier de déterminer la rhéologie et en particulier les propriétés rhéofluidifiantes de la composition en fonction de l'indice de fluidité à chaud massique ou volumique du ou des polymère(s) utilisé(s).

En particulier, les compositions utilisées selon l'invention comprenant du PLA, du PBAT et/ou du PP présentent une viscosité telle que le taux de fusion ou indice de fluidité à chaud massique (Melt Fusion Rate en langue anglaise) : MFR à 190°C, 2.16 kg est compris entre 1,5 et 7g/10 minutes selon la norme ISO1133 :2011, les compositions utilisées selon l'invention comprenant du PEI présentent une viscosité telle que le taux de fusion volumique ou indice de fluidité à chaud volumique (Melt Volume Rate en langue anglaise) : MVR à 340°C, 5,0 Kg est de 13cm$^3$/10 min selon la norme ISO 1133:2011.

Comme déjà mentionné, la présente invention vise encore l'utilisation de la composition selon l'invention pour la préparation d'un article biocide, en particulier pour inactiver les virus et plus particulièrement pour réduire voire éliminer la quantité de virus présent à la surface dudit article, de manière particulière les virus concernés sont les virus Influenza A, en particulier H1N1, et les coronavirus.

**Procédé de préparation de la composition**

La présente invention vise encore un procédé de préparation de la composition utilisée selon la présente invention comprenant au moins une étape de mélange des composants de la composition, en particulier au moins un polymère thermoplastique et une zéolithe particulière, de préférence par extrusion et de manière préférée eu moyen d'une extrudeuse bi-vis co-rotative.

Avantageusement, le procédé peut être mis en œuvre par un seul passage dans l'extrudeuse, ce qui permet d'éviter de dégrader le polymère et de conserver ses propriétés mécaniques et thermiques. A l'issue de cette étape, une composition homogène est obtenue dans laquelle la zéolithe est bien dispersée dans le polymère. Ce procédé est particulièrement simple à mettre en œuvre, le temps ainsi que les coûts de production sont ainsi optimisés.

Le mélange, de préférence l'extrusion, se fait en chauffant les composants à une température dite température de mise en œuvre, nommée Tp. Cette température est généralement précisée par le fournisseur.

Comme déjà mentionné, tous les polymères thermoplastiques, dans la mesure où ils fondent et durcissent de manière réversible, sont utilisables dans le procédé de préparation de la composition selon l'invention.

Dans le cas des polymères cristallins ou semi-cristallins, la température de mise en œuvre Tp est légèrement supérieure à la température de fusion, généralement la température de mise en œuvre Tp est comprise entre la température de fusion Tf du polymère et Tf + 20 °C c'est-à-dire une température supérieure de 20°C à la température de fusion.

Lorsque la composition comprend plusieurs polymères cristallins ou semi-cristallins, la température de mise en œuvre Tp est comprise entre la température de fusion du polymère présentant le point de fusion Tfmax le plus haut et Tfmax + 20 °C.

Pour le PEI, polymère amorphe, la température de mise en œuvre est comprise entre 320 et 400°C.

Généralement, les composants sont dosés séparément à l'aide de doseurs gravimétriques puis introduits par une trémie située à l'entrée de l'extrudeuse bivis au niveau de la culasse d'alimentation matière. L'ensemble vis/fourreau composant l'extrudeuse bivis co-rotative est avantageusement chauffée à une température dite « température de mise en oeuvre du procédé » Tp.

De manière préférée, la composition utilisée selon la présente invention est préparée selon un procédé comprenant les étapes suivantes, dans cet ordre :

i) dosage séparé des composants au moyen de doseurs gravimétriques et introduction, dans la trémie d'une extrudeuse bivis co-rotative, de la zéolithe et du/des polymère(s), puis chauffage à la température Tp, la vitesse de rotation des vis de l'extrudeuse bivis co-rotative est établie entre 100 et 800 RPM, c'est-à-dire tours par minute, de préférence entre 200 et 600 RPM et de manière préférée entre 400 et 600 RPM ;

ii) mélange par passage dans l'extrudeuse bivis co-rotative et récupération du mélange obtenu sous forme de joncs de diamètre compris entre 2 et 4mm, refroidis sous eau, et transformés en granulés cylindriques de diamètre compris entre 2 et 4 mm et de longueur comprise entre 1,5 et 5 mm à l'aide d'un granulateur à couteaux rotatifs, ou découpe sous eau en tête de filière pour obtention de granules sphériques de diamètre compris entre 0,5 et 4 mm.

Selon une première variante, les granulés obtenus sont transformés en filaments calibrés et conditionnés sous forme de bobines à l'aide d'une ligne d'extrusion filage composée d'une extrudeuse monovis, d'un bac de refroidissement des filaments sous eau, d'une tireuse rotative, d'un dispositif de contrôle dimensionnel bidirectionnel optique et d'un dispositif d'enroulement/trancanage. La conformation et la calibration du filament sont réalisées selon les standards dimensionnels pour l'impression 3D par dépôt de fil fondu, soit selon un diamètre de filament de 1,75 mm ou 2,85 mm. Cette première variante est particulièrement adaptée pour les compositions comprenant au moins un polymère thermoplastique choisi parmi le PLA, le PBAT, le PP et le PEI.

Selon une deuxième variante, les granulés obtenus sont transformés en filaments calibrés à l'aide d'une ligne d'extrusion filage composée d'une extrudeuse monovis, d'un bac de refroidissement des filaments sous eau, d'une tireuse rotative, d'un dispositif de contrôle dimensionnel bidirectionnel optique. La conformation et la calibration du filament sont réalisées afin d'obtenir un filament de diamètre compris entre 0,5 et 1,5 mm destiné à être granulé par un granulateur à couteau rotatif permettant l'obtention de micro-granulés cylindriques (micro-pellet en langue anglaise) ayant des diamètres compris entre 0,5 et 1,5 mm et de longueurs comprises entre 0,5 et 1,5 mm destinés à l'impression 3D à l'aide d'une micro extrudeuse à granulés ou micro pellet extruder en langue anglaise. Cette deuxième variante est particulièrement adaptée d'une part pour les pièces de grande dimension et d'autre part pour les compositions comprenant du PP.

**Procédé de préparation d'articles par fabrication additive par dépôt de matière fondue**

La présente invention vise encore un procédé de préparation d'un article selon la présente invention à partir d'une composition selon la présente invention comprenant les étapes suivantes, dans cet ordre :

i) placer une composition selon la présente invention dans la zone d'alimentation d'une imprimante pour fabrication additive par dépôt de matière fondue,
ii) entraîner ladite composition vers la tête d'impression de l'imprimante composée d'un corps de chauffe et d'une buse d'impression, de préférence de section cylindrique, où ladite composition est portée à la température d'impression ;
iii) extruder la composition fondue au travers de la buse de la tête d'impression pour former une pièce tridimensionnelle par dépôt de couches successives.

A l'étape i), la composition introduite dans la zone d'alimentation peut être sous forme de granulés, l'imprimante utilisée est alors munie d'une extrudeuse à granulés ou « pellet extruder » en langue anglaise. De manière préférence, la composition introduite dans la zone d'alimentation est sous forme de filament, l'imprimante utilisée est alors une imprimante 3D par dépôt de fil fondu.

L'étape ii) est généralement réalisée à une température d'impression allant de 190 à 240°C pour le PLA, le PBAT et le PP et de 350 à 450°C pour le PEI.

La présente invention vise aussi l'utilisation de la composition selon l'invention dans un procédé de fabrication additive par dépôt de matière fondue dans laquelle la composition comprend du PLA et est utilisée pour la préparation d'articles choisis parmi les poignées de porte, les protections de barre de transport en commun, les visières anti-projections, les clips de fixation de masque filtrant.

La présente invention vise encore l'utilisation de la composition selon l'invention dans un procédé de fabrication additive par dépôt de matière fondue laquelle la composition comprend du PBAT et est utilisée pour la préparation d'articles choisis parmi les poignées de chariots en particulier de chariots de supermarché, les coques de téléphone, les semelles.

La présente invention vise également l'utilisation de la composition selon l'invention dans un procédé de fabrication additive par dépôt de matière fondue laquelle la composition comprend du PEI et est utilisée pour la préparation de matériel médical résistant aux cycles de stérilisations utilisés dans les hôpitaux.

Les exemples qui suivent visent à illustrer l'invention sans en limiter la portée.

Les quantités en poids des compositions sont données en kilogrammes (kg).

**Exemples**

**A. Préparation des compositions**

Les compositions ont été préparées par dosage des composants en entrée d'extrudeuse bivis co-rotative par deux doseurs gravimétriques Brabender Technologie respectivement référencés DSR28 et DDSR 20. Le premier doseur est dédié au dosage du/des polymère(s) thermoplastique(s). Le second doseur est dédié à la zéolithe. Le débit cumulé de ces deux doseurs est fixé à 10 kg/H. L'extrudeuse bivis co-rotative utilisée est un modèle TSA TT22-40 (Diamètre vis =22mm L/D=40) du fabricant TSA Industriale équipée d'une filière 3 joncs de diamètres 3 mm. Le procédé est mis en oeuvre à la temperature (Tp) et la vitesse de rotation est fixée à 400 RPM. Les joncs sont refroidis en sortie de filière dans un bain d'eau thermorégulé puis granulés à l'aide d'un granulateur à couteaux rotatifs.

Une zéolithe NaY au cuivre commercialisée par la société Enercat sous la dénomination commerciale BIOCAT est utilisée pour préparer les compositions suivantes.

**Exemple 1** - **Polymère thermoplastique** : **PLA**

La composition a été préparée selon le procédé décrit ci-dessus en mélangeant 1,2 kg de zéolithe au cuivre avec 18,8 kg de PLA vendu sous la dénomination commerciale Ingeo Biopolymer 3D850 par la société NatureWorks®.

L'extrusion a été effectuée à la température Tp de 200°C dans l'extrudeuse bivis et 190°C pour le filage. 20 kg de composition sous forme de filament ont été obtenu et 2kg ont été imprimés.

**Exemple 2** - **Polymère thermoplastique** : **PLA**

La composition a été préparée selon le procédé décrit ci-dessus en mélangeant 1,0 kg de zéolithe au cuivre et 0,2 kg de zéolithe à l'argent commercialisée sous la dénomination Zeo-Ag_01 par Enercat avec 18,8 kg de PLA vendu sous la dénomination commerciale Ingeo Biopolymer 3D850 par la société NatureWorks®.

L'extrusion a été effectuée à la température Tp de 200°C dans l'extrudeuse bivis et 190°C pour le filage. 20 kg de composition sous forme de filament ont été obtenus et 2kg ont été imprimés.

### Exemple 3 - Polymère thermoplastique : PBAT

La composition a été préparée selon le procédé décrit ci-dessus en mélangeant 1,2 kg de zéolithe au cuivre avec 18,8 kg de PBAT vendu sous la dénomination commerciale Ecoflex C1200 par la société BASF.

L'extrusion a été effectuée à la température Tp de 180°C dans l'extrudeuse bivis et 150°C pour le filage. 20 kg de composition sous forme de filament ont été obtenus et 2kg ont été imprimés.

### Exemple 4 - Polymère thermoplastique : PLA-PBAT

La composition a été préparée selon le procédé décrit ci-dessus en mélangeant 1 kg de zéolithe au cuivre avec 15,8 kg de PLA vendu sous la dénomination commerciale Ingeo Biopolymer 3D850 par la société NatureWorks®, 2,26 kg de PBAT vendu sous la dénomination commerciale Ecoflex C1200 par la société BASF et 0.34 kg d'extrait de pépins de pamplemousse vendu sous la référence PEPINS PAMPLEMOUSSE ABIOMG par la société ALPHATECH.

L'extrusion a été effectuée à la température Tp de 200°C dans l'extrudeuse bivis et 190°C pour le filage. 20 kg de composition sous forme de filament ont été obtenu et 2kg ont été imprimés.

### Exemple 5 - Polymère thermoplastique : PEI

La composition a été préparée selon le procédé décrit ci-dessus en mélangeant 1,2 kg de zéolithe au cuivre avec 18,8 kg de PEI vendu sous la dénomination commerciale Ultem 1010 par la société SABIC.

L'extrusion a été effectuée à la température Tp de 380°C dans l'extrudeuse bivis et 360°C pour le filage. 20 kg de composition sous forme de filament ont été obtenus et 2kg ont été imprimés.

### Exemple 6 - Polymère thermoplastique : PP

La composition a été préparée selon le procédé décrit ci-dessus en mélangeant 1,2 kg de zéolithe au cuivre avec 18,8 kg de PP vendu sous la dénomination commerciale HP HE125 MO par la société Boréalis.

L'extrusion a été effectuée à la température Tp de 190°C.

20 Kg de composition sous forme de filament ont été obtenus et 2kg ont été imprimés.

### B. Préparation d'articles

Des articles ont été préparés à partir de la composition PLA/Zéolithe Cu préparée à l'exemple 1 ci-dessus. Un article a ainsi été produit à partir d'un filament (Diamètre 2,85mm).

400 m de filament de la composition PLA/Zéolithe Cu a été introduit en tête de la zone d'alimentation d'une imprimante 3NTR A4V4. Le filament a été entrainé par un extrudeur de type «Bowden drive », puis la composition a été entraînée vers la tête d'impression de l'imprimante où elle est portée à une température de 210°C. La composition fondue est extrudée au travers de la buse de la tête d'impression de diamètre 0,6 mm avec une vitesse de déplacement de 25 mm/s de manière à former des articles tridimensionnels par dépôt de couches successives. Le plateau de dépose matière est porté à une température de 60°C au cours de l'impression.

### C. Propriété anti-microbienne des articles

Des plaques P1 et P2 de de 5cm x 5 cm x 1 cm ont été préparées selon le procédé développé au paragraphe B ci-dessus. La plaque P1 a été préparée à partir de la composition de l'exemple 1 et plaque P2 a été préparées à partir de la composition de l'exemple 4.

En outre une plaque de PLA sans zéolithe P0 préparée dans les mêmes conditions a été utilisée à titre de témoin/contrôle.

L'activité antivirale des compositions selon l'invention a été mesurée conformément à la norme ISO 21702 :2019 en utilisant le virus Influenza A (H1N1).

Méthode et protocole

Une suspension comprenant le virus de la grippe A influenza A (H1N1) a été inoculée (déposée) sur les plaques P0, P1 et P2 puis les plaques ont été recouvertes par un film de PVC.

Pour la première série d'essais dont les résultats sont présentés dans le tableau 1, les plaques P1 et P0 ont été traitées de manière à obtenir 6 309 573 particules virales /cm$^2$.

Pour la deuxième série d'essais dont les résultats sont présentés dans le tableau 2, les plaques P2 et P0 ont été traitées de manière à obtenir 3 548 134 particules virales /cm$^2$.

Chaque essai a été reproduit trois fois. Les plaques ont été maintenues à 25°C pendant 2, 4 et 8 heures.

A la fin de ce temps de contact, l'inoculum (les microorganismes restants) est récupéré et neutralisé puis une dilution en série au 1/10 est réalisée afin de quantifier le titre d'infectivité du virus. Des unités de cellules sont inoculées avec chaque dilution et les cellules sont cultivées à 37°C pendant 2 à 3 jours.

Le titrage viral a été déterminé en utilisant la méthode Spearman-Kärber (évaluation TCIDso) par la présence d'effet cytopathique (CPE) et vérification par le test d'hémagglutination. Dans chaque série d'essais, l'activité anti-virale a été calculée par mesure de la réduction du titre viral sur les plaques traitées P1 ou P2 en comparaison avec le titre viral de la plaque P0.

Le nombre de microorganismes survivants à la surface des plaques traitées ont été déterminés quantitativement par rapport à la surface de référence. N/A signifie non applicable.

L'activité antivirale est déterminée au moyen de la formule :

$$R = (Ut-U0) - (At-U0) = Ut-At$$

avec R l'activité antivirale ;

U0 la moyenne du titre viral des 3 plaques P0, immédiatement après inoculation (temps de contact = 0 heure) en UI/cm2 ;

Ut la moyenne du titre viral récupéré des 3 plaques P0, après des temps de contact de 2, 4 et 8 heures, en UI/cm2 ;

At la moyenne du titre viral récupéré des 3 plaques traitées (P1 ou P2), après des temps de contact de 2, 4 et 8 heures, en UI/cm2.

Résultats obtenus pour la comparaison de P1 avec P0 sont regroupés dans le tableau 1.

[Tableau 1]

| Activité antivirale | Plaque P0 | | | Plaque P1 | |
|---|---|---|---|---|---|
| | Temps de contact | | | Temps de contact | |
| | 0 min | 4 H | 8 H | 4 H | 8 H |
| Essai 1 | 8.00 | 7.25 | 7.13 | ≤ 4.5 | ≤ 4.5 |
| Essai 2 | 8.13 | 7.63 | 7.50 | ≤ 4.5 | ≤ 4.5 |
| Essai 3 | 7.88 | 7.25 | 7.50 | ≤ 4.5 | ≤ 4.5 |
| Moyenne (UI/ml) | 8.00 | 7.38 | 7.38 | ≤ 4.5 | ≤ 4.5 |
| Moyenne (UI/cm$^2$) | 6.80 | 6.18 | 6.18 | ≤ 3.30 | ≤ 3.30 |
| | U0 | Ut4h | Ut8h | At4h | At8h |
| R (cf Math1) | N/A | N/A | N/A | ≥ 2.88 | ≥ 2.88 |

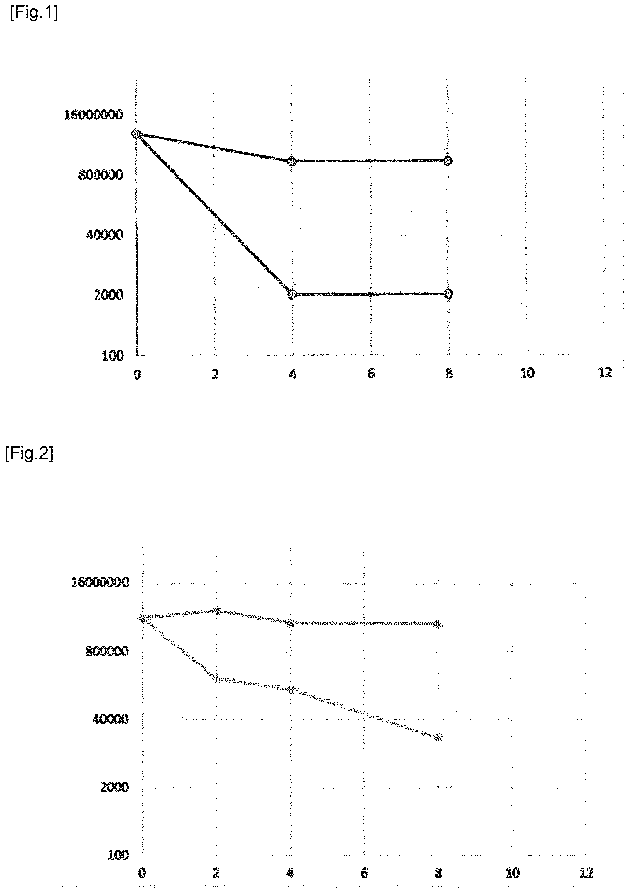

[Fig.1] représente la quantité de virus présents sur la surface ( log DICT50/cm2) en fonction du temps. La courbe supérieure présente les valeurs obtenues avec la plaque P0 et la courbe inférieure présente les valeurs obtenues avec la plaque P1 : les valeurs à 4 et 8 heures représentent une efficacité antivirale (diminution du nombre de virus) de 99.9%.

Résultats obtenus pour la comparaison de P2 avec P0 sont regroupés dans le tableau 2.

[Tableau 2]

| Activité antivirale | Plaque P0 | | | | Plaque P2 | | |
|---|---|---|---|---|---|---|---|
| | Temps de contact | | | | Temps de contact | | |
| | 0 min | 2H | 4 H | 8 H | 2H | 4 H | 8 H |
| Essai 1 | 7.75 | 8.00 | 7.63 | 7.88 | 6.75 | 6.13 | 5.00 |
| Essai 2 | 7.63 | 7.63 | 7.88 | 7.63 | 6.63 | 6.63 | 6.00 |
| Essai 3 | 7.88 | 8.00 | 7.50 | 7.38 | 6.38 | 6.38 | 5.38 |
| Moyenne (UI/ml) | 7.75 | 7.88 | 7.66 | 7.63 | 6.58 | 6.38 | 5.46 |
| Moyenne (UI/cm$^2$) | 6.55 | 6,68 | 6.46 | 6.43 | 5.38 | 5.18 | 4.26 |
| | Uo | Ut2h | Ut4h | Ut8h | At2h | At4h | At8h |
| R (cf Math1) | N/A | N/A | N/A | N/A | 1.30 | 1.25 | 2.17 |

[Fig.2] représente la quantité de virus présents sur la surface (log DICT50/cm2) en fonction du temps. La courbe supérieure présente les valeurs obtenues avec la plaque P0 et la courbe inférieure présente les valeurs obtenues avec la plaque P2 : les valeurs à 2, 4 et 8 heures représentent une efficacité antivirale (diminution du nombre de virus) respectivement de 95%, 94,8% et 99.3%.|

**Revendications**

1. Utilisation d'une composition comprenant au moins un polymère thermoplastique et une zéolithe dans un procédé de fabrication additive par dépôt de matière fondue, **caractérisée en ce que** la composition comprend :

   de 92 à 98% en poids d'au moins un polymère thermoplastique par rapport au poids total de la composition et de 2 à 8 % en poids de zéolithe contenant du cuivre par rapport au poids total de la composition, ladite zéolithe présentant une granulométrie allant de 1 à 5μM, contenant de 20 à 25% en poids d'eau par rapport au poids total de la zéolithe et du cuivre en une quantité allant de 2 à 6% en poids par rapport au poids total de la zéolithe sous forme sèche.

2. Utilisation selon la revendication 1 **caractérisée en ce que** la composition comprend de 4 à 6 % en poids de zéolithe contenant du cuivre par rapport au poids total de la composition.

3. Utilisation selon l'une quelconque des revendications précédentes **caractérisée en ce que** la zéolithe contient de 3 à 4% en poids de cuivre par rapport au poids total de la zéolithe sous forme sèche.

4. Utilisation selon l'une quelconque des revendications précédentes **caractérisée en ce que** la zéolithe est une zéolithe synthétique choisie parmi les zéolithes de forme A, X et Y et de manière préférée de forme Y.

5. Utilisation selon l'une quelconque des revendications précédentes dans laquelle la zéolithe est une zéolithe NaY.

6. Utilisation selon l'une quelconque des revendications précédentes dans laquelle la composition comprend la zéolithe contenant du cuivre en tant que seule zéolithe.

7. Utilisation selon l'une quelconque des revendications 1 à 5 dans laquelle la composition comprend au moins une zéolithe supplémentaire choisie parmi les zéolithes d'argent et les zéolithes de zinc.

8. Utilisation selon l'une quelconque des revendications précédentes dans laquelle le polymère thermoplastique est choisi dans le groupe formé par le poly(acide lactique), le polybutylene adipate terephtalate, et le polypropylène.

9. Utilisation selon l'une quelconque des revendications 1 à 7 dans laquelle le polymère thermoplastique est choisi parmi les polyétherimides.

10. Utilisation selon l'une quelconque des revendications précédentes dans laquelle la composition comprend au moins un additif choisi dans le groupe formé par les agents plastifiants, les agents antioxydants, les lubrifiants, les colorants, les agents anti-buée, les agents anti-moussants, les charges, les extraits de plantes.

11. Utilisation selon l'une quelconque des revendications précédentes dans laquelle la composition est préparée selon un procédé comprenant au moins une étape de mélange du polymère thermoplastique et de la zéolithe, de préférence par extrusion et de manière préférée au moyen d'une extrudeuse bi-vis co-rotative.

12. Utilisation de la composition selon l'une quelconque des revendications 1 à 10 ou de la composition préparée selon l'une quelconque la revendication 11 dans un procédé de fabrication additive par dépôt de matière fondue pour la préparation d'un article biocide en particulier pour inactiver les virus notamment les virus influenza A et les coronavirus.

13. Utilisation de la composition selon la revendication précédente dans un procédé de fabrication additive par dépôt de matière fondue **caractérisée en ce qu'**elle comprend du PLA et qu'elle est utilisée pour la préparation d'articles choisis parmi les poignées de porte, les protections de barre de transport en commun, les visières anti-projections, les clips de fixation de masque filtrant.

14. Utilisation de la composition selon la revendication 12 dans un procédé de fabrication additive par dépôt de matière fondue **caractérisée en ce qu'**elle comprend du PBAT et qu'elle est utilisée pour la préparation d'articles choisis parmi les poignées de chariots en particulier de chariots de supermarché, les coques de téléphone, les semelles.

15. Utilisation de la composition selon la revendication 12 dans un procédé de fabrication additive par dépôt de matière fondue **caractérisée en ce qu'**elle comprend du PEI et qu'elle est utilisée pour la préparation de matériel médical résistant aux cycles de stérilisations utilisés dans les hôpitaux.

[Fig.1]

[Fig.2]

Europäisches
Patentamt

European
Patent Office

Office européen
des brevets

# RAPPORT DE RECHERCHE EUROPEENNE

Numéro de la demande

EP 21 21 0645

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | US 9 523 160 B2 (BNK CO LTD [KR]) 20 décembre 2016 (2016-12-20) * colonne 2, lignes 51-54 * * colonne 3, lignes 1-10 * * colonne 4, lignes 4-8 * * revendications 1,2 * ----- | 1-15 | INV. A01N59/20 B29C64/118 B33Y10/00 B33Y70/10 C08K3/34 D01F1/10 |
| A | EP 3 599 220 A1 (ENERCAT [FR]) 29 janvier 2020 (2020-01-29) * exemples * ----- | 1-15 | C08L67/04 A01N25/10 A01N59/16 B33Y70/00 |
| Y | EP 0 275 047 A2 (KANEBO LTD [JP]; HAGIWARA GIKEN KK [JP]) 20 juillet 1988 (1988-07-20) * page 2, lignes 4-5 * * page 7, lignes 27-38 * ----- | 1-15 | B33Y80/00 D01D5/08 |

DOMAINES TECHNIQUES RECHERCHES (IPC)

B33Y
D01F
A01N
B29C
C08K
C09J
C08L

Le présent rapport a été établi pour toutes les revendications

| Lieu de la recherche | Date d'achèvement de la recherche | Examinateur |
|---|---|---|
| Munich | 1 avril 2022 | Behm, Sonja |

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 21 0645

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01−04−2022

| Document brevet cité au rapport de recherche | | Date de publication | Membre(s) de la famille de brevet(s) | | Date de publication |
|---|---|---|---|---|---|
| US 9523160 | B2 | 20−12−2016 | KR | 20160029494 A | 15−03−2016 |
| | | | US | 2016069001 A1 | 10−03−2016 |
| | | | WO | 2016035949 A1 | 10−03−2016 |
| EP 3599220 | A1 | 29−01−2020 | EP | 3599220 A1 | 29−01−2020 |
| | | | FR | 3084351 A1 | 31−01−2020 |
| EP 0275047 | A2 | 20−07−1988 | EP | 0275047 A2 | 20−07−1988 |
| | | | JP | S63175117 A | 19−07−1988 |
| | | | US | 5064599 A | 12−11−1991 |

EPO FORM P0460

Pour tout renseignement concernant cette annexe : voir Journal Officiel de l'Office européen des brevets, No.12/82

**EP 4 008 187 A1**

**RÉFÉRENCES CITÉES DANS LA DESCRIPTION**

**Documents brevets cités dans la description**

- US 9523160 B2